# EUROPÄISCHE PATENTSCHRIFT

(11) **EP 1 922 213 B1**
(45) Veröffentlichungstag und Bekanntmachung des Hinweises auf die Patenterteilung: **16.05.2012**
(21) Anmeldenummer: 06777040.4
(22) Anmeldetag: 23.08.2006
(51) Int. Cl.: B32B 3/12, B32B 37/00

(54) **Verfahren zur Herstellung von Sandwichbauteilen sowie Presse**
Method for producing sandwich components and corresponding press
Procede de fabrication de composants sandwich et presse

(30) Priorität: 23.08.2005 DE 102005039837
(43) Veröffentlichungstag der Anmeldung: 21.05.2008
(73) Patentinhaber: Airbus Deutschland GmbH, 21129 Hamburg (DE)
(72) Erfinder: HESSE, Karsten, 28209 Bremen (DE); BUSCH, Heinz-Peter, 28844 Weyhe (DE)
(74) Vertreter: Kopf, Korbinian Paul
(86) Internationale Anmeldenummer: PCT/EP2006/008289
(87) Internationale Veröffentlichungsnummer: WO 2007/022971

(56) Entgegenhaltungen:
- EP-A2- 1 258 343
- US-A- 3 814 653
- US-A- 5 242 651

## Beschreibung

Die Erfindung betrifft ein Verfahren zur Herstellung von Sandwichbauteilen mit einer offenen Kernstruktur und beidseitig aufgebrachten Deckschichten, wobei die Deckschichten mit einem aushärtbaren Kunststoffmaterial gebildet sind, und das Sandwichbauteil in einer geschlossenen Vorrichtung unter Druck ausgehärtet wird.

Weiterhin betrifft die Erfindung eine Presse zur Durchführung des erfindungsgemäßen Verfahrens mit zwei mittels mindestens einer Heizeinrichtung temperierbaren Pressflächen, die von einem Rahmen zur Abdichtung umgeben sind, wobei eine Kernstruktur sowie mindestens zwei mit einem aushärtbaren Kunststoffmaterial gebildete Deckschichten zur Bildung eines Sandwichbauteils in den Rahmen einbringbar sind.

Aus US 5,242,651 A ist ein Verfahren zur Herstellung von Kompositstrukturen bekannt. Dabei wird ein wabenförmiger Kern durch harzimprägnierte Kompositflächen abgedeckt und unter einem Vakuum in einem Autoklaven unter hohen Temperaturen und Drücken ausgehärtet. Aus US 3,814,653 A ist ein Verfahren zum laminieren von Bauteilen mit Hilfe eines Formrahmens bekannt.

Sandwichbauteile für Anwendungen im Leichtbau, insbesondere im Flugzeugbau, werden in der Regel mit Kernstrukturen gebildet, auf die beidseitig Deckschichten aufgebracht werden. Die Deckschichten werden vielfach mit einem vorgefertigten, so genannten "Prepreg"-Material gebildet. Bei diesem "Prepreg"- Material handelt es sich um Verstärkungsfasergewebe, Verstärkungsfasergelege oder auch diskrete Verstärkungsfasern, die herstellerseitig mit einem aushärtbaren Kunststoffmaterial, beispielsweise einem Epoxydharz, Polyesterharz, Phenolharz oder einem BMI-Harz vorimprägniert sind. Das "Prepreg"-Material ist selbst bei niedrigen Lagertemperaturen nur begrenzt haltbar und muss zeitnah verarbeitet werden. Als Kemstrukturen finden oftmals Honigwabenstrukturen oder Faltwabenstrukturen mit unterschiedlichen Geometrien Verwendung.

Zur Herstellung des fertigen Sandwichbauteils, beispielsweise einer ebenen Sandwichplatte, werden die Deckschichten vorzugsweise beidseitig auf die Kernstruktur aufgelegt. Die Deckschichten können, in Abhängigkeit von den Festigkeitsanforderungen, mit einer Vielzahl von übereinander geschichteten Lagen mit "Prepreg"-Material gebildet sein. Dieser Aufbau wird sodann in einer geeigneten Vorrichtung, insbesondere einer Presse oder in einem Autoklaven, bei erhöhter Temperatur und bei erhöhtem Druck zur Bildung des fertigen Sandwichbauteils über einen exakt definierten Zeitraum ausgehärtet.

Infolge der erforderlichen, im Vergleich zur Umgebungstemperatur erhöhten Aushärtungstemperatur von beispielsweise 140°C steigt der Innendruck in jeder Zelle der Kernstruktur an. Zunächst kann der innere Überdruck aus den Zellen entweichen, weil das in den Deckschichten enthaltene aushärtbare Kunststoffmaterial seine Viskosität während des Aushärtungsvorgangs ändert. Kühlt das Sandwichbauteil nach dem Abschluss des Aushärtungsvorgangs ab, so entsteht in den einzelnen Zellen der Kernstruktur ein leichter Unterdruck, der zu Einfallstellen über jeder Zelle der Kernstruktur führt. Das vorstehend beschriebene Verhalten ist unabhängig vom verwendeten aushärtbaren Kunststoffmaterial bzw. Harzsystem.

Um eine ausreichende Oberflächengüte der fertigen Sandwichbauteile, insbesondere für die Anwendung als Innenverkleidungsbauteile für Passagierkabinen von Luftfahrzeugen, zu gewährleisten, ist in der Regel eine aufwändige Nachbearbeitung der Oberflächen, beispielsweise durch Schleifen und Spachteln, erforderlich. Weiterhin kann während des Aushärtungsvorgangs Kunststoffmaterial bzw. "Prepreg"-Material durch Wasserdampfbildung zumindest bereichsweise aufschäumen, so dass im Bereich der Innenflächen der Deckschichten die mechanische Anbindung der Deckschichten an die Kernstruktur beeinträchtigt ist.

Aufgabe der Erfindung ist es, ein Verfahren zur Herstellung von Sandwichbauteilen anzugeben, das die Fertigung von Sandwichbauteilen mit optimalen Oberflächen ermöglicht.

Diese Aufgabe wird zunächst durch ein Verfahren mit den kennzeichnenden Merkmalen des Patentanspruchs 1 gelöst.

Dadurch, dass vor dem zumindest teilweisen Erstarren der Deckschichten ein Füllgas, insbesondere Stickstoff oder Luft, in die Kernstruktur eingebracht wird, wobei ein Füllgasdruck kleiner oder gleich einem Arbeitsdruck der geschlossenen Vorrichtung gewählt wird, um insbesondere die Bildung von Einfallstellen in den Deckschichten zumindest weitgehend zu vermeiden, können Sandwichbauteile mit nahezu optimalen Oberflächeneigenschaften, die eine mechanische Nachbearbeitung in der Regel überflüssig machen, hergestellt werden.

Erfindungsgemäß wird der Füllgasdruck von einer Steuer- und Regeleinrichtung in Abhängigkeit vom Erstarrungsgrad der Deckschichten variiert.

Hierdurch ist eine sehr präzise Steuerung des Ablaufs des erfindungsgemäßen Verfahrens möglich, die zu nahezu optimalen Oberflächen, insbesondere ohne Einfallstellen oder dergleichen, der Sandwichbaueile führt.

Nach Maßgabe einer weiteren vorteilhaften Ausgestaltung ist vorgesehen, dass die Temperatur des Füllgases verringert wird, um die Verweilzeit des Sandwichbauteils in der Vorrichtung zu reduzieren.

Hierdurch ist eine Beschleunigung des gesamten Herstellungsverfahrens möglich, da die Abkühlzeiten der ausgehärteten Sandwichbauteile verkürzt werden.

In Gemäßheit einer weiteren Ausgestaltung der Erfindung wird zum Aushärten des Sandwichbauteils eine Presse oder ein Autoklav verwendet.

Zur Durchführung des erfindungsgemäßen Verfahrens wird zunächst mindestens eine Deckschicht, gefolgt von einer notwendigerweise offenen Kernstruktur sowie mindestens einer weiteren Deckschicht in die Presse eingelegt und unter erhöhtem Druck sowie erhöhter Temperatur ausgehärtet, wobei die Kernstruktur mit einem Füllgas geflutet wird. Dabei darf der Füllgasdruck nicht höher als ein Arbeitsdruck der Presse gewählt werden, um eine ausreichende Anpassung der Deckschichten an die Kernstruktur und damit eine hinreichend feste Verklebung der Deckschichten mit der Kernstruktur während des Aushärtungsvorgangs zu erzielen.

In einer alternativen Vorgehensweise kann die Aushärtung des Sandwichbauteils auch in einem Autoklaven erfolgen. Der Innendruck des Autoklaven ist hierbei wiederum größer als der Füllgasdruck zu wählen.

Eine weitere vorteilhafte Ausgestaltung des erfindungsgemäßen Verfahrens sieht vor, dass der Erstarrungsgrad der Deckschichten, insbesondere ein Viskositätszustand der Deckschichten, von der Steuer- und Regeleinrichtung erfasst wird und der Füllgasdruck entsprechend variiert wird.

Hierdurch lässt sich die Bildung von Einfallstellen in den Deckschichten, die während des Abkühlvorgangs in den Zellen der Kernstruktur entstehen, mittels einer Erhöhung des Füllgasdrucks nahezu vollständig unterdrücken, die ansonsten eine aufwändige mechanische Nachbearbeitung erforderlich machen. Eine direkte Messung des Erstarrungsgrades der Deckschichten erlaubt hierbei eine genauere Regelung des zur Vermeidung von Einfallstellen erforderlichen Füllgasdrucks in der Kernstruktur des Sandwichbauteils im Vergleich zur indirekten Ermittlung des jeweiligen Erstarrungsgrades durch empirisch ermittelte, beispielsweise zeit - und/oder temperaturabhängige Aushärtungskurven des jeweils verwendeten "Prepreg"-Materials bzw. des eingesetzten Harzsystems.

In Gemäßheit einer weiteren vorteilhaften Ausgestaltung wird der Viskositätszustand mindestens einer Deckschicht von der Steuer- und Regeleinrichtung durch eine Änderung der Dielektrizitätszahl ermittelt.

Während des Aushärtungsvorgangs der mit einem aushärtbaren Kunststoffmaterial, beispielsweise einem Epoxydharz, einem Polyesterharz, einem Phenolharz, einem BMI-Harz oder dergleichen, gebildeten Deckschichten verändert sich die Dielektrizitätszahl der Deckschichten, die auf einfache Weise beispielsweise durch in der geschlossenen Vorrichtung, beispielsweise einer Presse oder dergleichen, geeignet angeordnete Messaufnehmer durch die Steuer- und Regeleinrichtung erfassbar ist.

In Gemäßheit einer weiteren vorteilhaften Ausgestaltung des Verfahrens wird zur Bildung einer integralen Randabdichtung für das Sandwichbauteil mindestens ein über die Kernstruktur überstehender Randabschnitt mindestens einer Deckschicht vor dem Aushärtungsvorgang in der geschlossenen Vorrichtung zumindest abschnittsweise an mindestens eine Kante der Kernstruktur und/oder an die andere Deckschicht angelegt.

Zur Bildung der integralen Randabdichtung ist es erforderlich, dass mindestens eine Deckschicht eine größere Fläche als die Oberseite bzw. Unterseite der Kernstruktur aufweist. Zur Bildung der integralen Randabdichtung werden die überstehenden Randabschnitte zumindest an die Kanten der Kernstruktur angelegt. Hierzu müssen die Randabschnitte um 90° "abgekantet" werden. Weisen die Randabschnitte eine ausreichend große Breite auf, so lassen sich diese sowohl an die Kanten der Kernstruktur als auch an die Oberseite der anderen Deckschicht anlegen, so dass sich ein sehr guter Verbund der integralen Randabdichtung mit der Kernstruktur und den Deckschichten ergibt. Der auf diese Art und Weise gebildete Aufbau, bestehend aus der Kernstruktur sowie den entsprechend "abgekanteten" Deckschichten wird beispielsweise in einen Rahmen einer geeigneten Pressvorrichtung eingelegt.

Hierbei muss der Rahmen exakt auf die sich ergebende Größe des Sandwichbauteils abgestimmt sein, damit zum einen bei der Zuführung des Füllgases keine Ausbeulungen der um die Kanten der Kernstruktur gelegten Deckschichten auftreten. Zum anderen darf der Rahmen nicht zu eng bemessen sein, da die zusätzliche Materialstärke der an die Kanten der Kernstruktur angelegten Randbereiche mindestens einer Deckschicht ausreichend berücksichtigt werden muss, damit das auszuhärtende Sandwichbauteil in den Rahmen einlegbar ist.

Sind alle vier Seiten des Sandwichbauteils mit dem "Prepreg"- Material der Deckschichten umschlossen, ist es erforderlich, dass die Anschlüsse bzw. Zu- und Abluftstutzen für das Füllgas die um die Kanten der Kernstruktur gelegten Deckschichten zumindest an einer Seite durchdringen.

Weitere vorteilhafte Ausgestaltungen des Verfahrens sind in weiteren Patentansprüchen niedergelegt.

Darüber hinaus wird die erfindungsgemäße Aufgabe durch eine Presse zur Durchführung des Verfahrens nach Maßgabe des Patentanspruchs 7 gelöst.

Dadurch, dass der Rahmen mindestens einen Anschluss zur Zu- und/oder Abführung eines Füllgases in die Kernstruktur aufweist, um während des Aushärtungsvorgangs des Sandwichbauteils insbesondere die Entstehung von Einfallstellen in den Deckschichten zumindest teilweise zu vermeiden,
lassen sich Sandwichbauteile mit einer hohen Oberflächengüte, die insbesondere keine mechanischen Nacharbeiten durch Schleifen, Spachteln oder dergleichen erfordert, auf einfache Art und Weise herstellen.

Eine vorteilhafte Ausgestaltung der Presse sieht vor, dass ein Arbeitsdruck der Presse und/oder ein Füllgasdruck mittels einer Steuer- und Regeleinrichtung variierbar sind.

Hierdurch ist eine präzise Steuerung des Füllgasdrucks möglich, so dass insbesondere die Entstehung von Einfallstellen in den Deckschichten während des Aushärtungsvorgangs weitgehend vermieden werden kann.

In Gemäßheit einer weiteren vorteilhaften Ausgestaltung der Presse ist vorgesehen, dass eine Temperatur mindestens einer Pressfläche mittels der Steuer- und Regeleinrichtung variierbar ist.

Diese Ausgestaltung ermöglicht eine exakte und vor allem sicher reproduzierbare Durchführung des Aushärtungsvorgangs, die stets gleiche mechanische Eigenschaften der hergestellten Sandwichbauteile sicherstellt.

Eine weitere vorteilhafte Ausgestaltung sieht vor, dass eine Temperatur des Füllgases mittels der Steuer- und Regeleinrichtung variierbar ist.

Hierdurch lässt sich die Zeitdauer des gesamten Herstellungsprozesses verkürzen, in dem die Temperatur des Füllgases gegen Ende des Aushärtungsvorgangs zu Kühlzwecken abgesenkt wird, so dass die fertigen, ausgehärteten Sandwichbauteile schneller aus der Presse entnommen werden können.

In Gemäßheit einer weiteren vorteilhaften Ausgestaltung der erfindungsgemäßen Presse ist vorgesehen, dass ein Aushärtungsgrad der Deckschichten, insbesondere ein Viskositätszustand der Deckschichten, mittels der Steuer- und Regeleinrichtung erfassbar ist.

Die direkte Messung des Viskositätszustandes erlaubt eine exaktere Steuerung des Aushärtungsvorgangs im Vergleich zu einer indirekten Ermittlung des Aushärtungsgrades der Deckschichten durch empirisch ermittelte, zeit- und/oder temperaturabhängige Aushärtungskurven (Viskositäts-Kennfelder) oder dergleichen.

Weitere vorteilhafte Ausgestaltungen der erfindungsgemäßen Presse sind in den nachfolgenden Patentansprüchen niedergelegt.

In der Zeichnung zeigt:

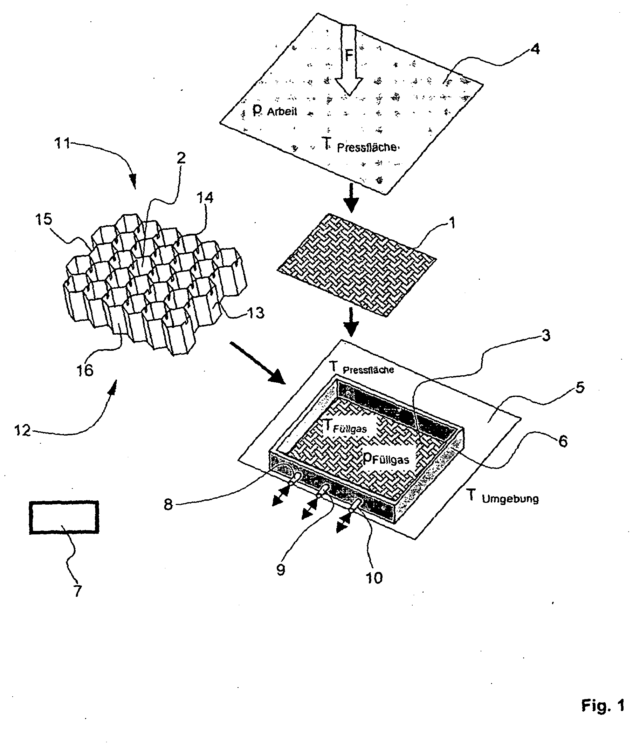

- **Fig. 1**: Eine Prinzipdarstellung der Presse zur Durchführung des erfindungsgemäßen Verfahrens.

Anhand der Fig. 1 sollen sowohl das erfindungsgemäße Verfahren als auch die zur Durchführung des Verfahrens eingesetzte Presse erläutert werden.

Die **Fig. 1** zeigt eine Presse zur Durchführung des Verfahrens mit Teilkomponenten eines herzustellenden Sandwichbauteils in einer perspektivischen Darstellung.

Eine Sandwichbauteil umfasst im gezeigten Ausführungsbeispiel eine Deckschicht 1, eine Kernstruktur 2 sowie eine weitere Deckschicht 3. Die Deckschichten 1,3 sind mit "Prepreg"-Material gebildet. Bei dem so genannten "Prepreg"-Material handelt es sich um Verstärkungsfasergewebe, Verstärkungsfasergelege oder diskrete Verstärkungsfasern, die mit einem aushärtbaren Kunststoffmaterial vorimprägniert sind. Als Verstärkungsfasern kommen insbesondere Kohlefasern, Glasfasern, Aramidfasern oder dergleichen in Betracht. Als aushärtbares Kunststoffmaterial für "Prepreg" -Materialien werden insbesondere Epoxydharze, Polyesterharze, BMI-Harze oder dergleichen eingesetzt. Durch die Zufuhr von Wärme können die "Prepreg" - Materialien ausgehärtet werden. Die Kernstruktur 2 ist im gezeigten Ausführungsbeispiel als ein geschlitzter Honigwabenkern ausgebildet. Anstatt eines geschlitzten Honigwabenkerns können beliebige offene, dreidimensionale, das heißt insbesondere drainagefähige Kernstrukturen, wie zum Beispiel mit harzstabilisierten Gewirken, harzstabilisierten Geweben, gelochten Kernstrukturen, offenporigen Schaumkunststoffen, Faltwabenkernen, geformten Gewebeabstandhaltern (zum Beispiel in der Form von Eierschalenkartons) oder dergleichen gebildete Kernstrukturen, eingesetzt werden.

Eine bei der Herstellung des Sandwichbauteils verwendete Presse umfasst unter anderem eine obere Pressfläche 4, eine untere Pressfläche 5 sowie einen Rahmen 6, der das zu fertigende Sandwichbauteil druckdicht umschließt. Für die Herstellung von eindimensional oder zweidimensional gekrümmten Sandwichbauteilen können die Pressflächen 4,5 eine von der gezeigten ebenen Gestalt abweichende geometrische Gestalt aufweisen und beispielsweise sphärisch gekrümmt ausgebildet sein. Die Pressflächen 4,5 sowie der Rahmen 6 verfügen über eine nicht dargestellte Heizeinrichtung. Mittels einer nicht dargestellten Antriebsvorrichtung, beispielsweise einem Hydraulikzylinder oder dergleichen, lässt sich zumindest die obere Pressfläche 4 mit einer definierten mechanischen Kraft F auf die untere Pressfläche 5 absenken. Infolge der auf die obere Pressfläche 4 wirkenden mechanischen Kraft F entsteht in der Presse ein Arbeitsdruck p _{Arbeit}. Der Arbeitsdruck p _{Arbeit} beträgt bis 15 bar. Mittels einer Steuer- und Regeleinrichtung 7 lässt sich zumindest die auf die obere Pressfläche 4 wirkende mechanische Kraft F sowie die Heizeinrichtung zur Temperierung der oberen und der unteren Pressfläche 4,5 steuern bzw. regeln. Außerhalb der Presse herrscht der normale Umgebungsluftdruck p _{Umgebung} sowie die normale Umgebungstemperatur T _{Umgebung}.

Der aus den Deckschichten 1,3 sowie der Kernstruktur 2 gebildete Aufbau zur Bildung des fertigen Sandwichelements wird zur Durchführung des erfindungsgemäßen Verfahrens in den Rahmen 6 eingelegt. Anschließend wird zumindest die obere Pressfläche 4 mit der Kraft F nach unten, gegen die untere Pressfläche 5 gedrückt, so dass die Deckschichten 1,3 fest auf die Kernstruktur 2 gepresst werden. Hierbei entsteht eine mechanisch sehr belastbare Verbindung zwischen der Kernstruktur 2 und den Deckschichten 1,3. Mittels der Heizeinrichtung wird hierbei die Temperatur T _{Pressfläche} der Pressflächen 4,5 so eingestellt, dass das zur Bildung der Deckschichten 1,3 eingesetzte "Prepreg"-Material mit einer für das jeweilige "Prepreg"-Material bzw. Harzsystem optimalen Aushärtungstemperatur aushärtet.

Der Rahmen 6 der Presse weist im gezeigten Ausführungsbeispiel drei Anschlüsse 8 bis 10 auf, durch die ein Füllgas unter einem bestimmten Füllgasdruck p _{Füllgas} in die Kernstruktur 2 zu- und abführbar ist. Die Steuerung des Füllgasdrucks p _{Füllgas} kann durch geeignete, mittels der Steuer- und Regeleinrichtung steuerbare Regelventile erfolgen, die den Zufluss von einem Druckgasspeicher beeinflussen. Um den Druck in der Kernstruktur 2 wieder definiert absenken zu können, muss gegebenenfalls auch eine Gasfördereinrichtung, beispielsweise eine Pumpe oder dergleichen, vorgesehen werden. Die Steuerung des Zu- und Abflusses des Füllgases durch die Anschlüsse 8 bis 10, insbesondere die Regelung des Füllgasdrucks p _{Füllgas} sowie die zu- und abgeführte Menge des Füllgases, werden von der Steuer- und Regeleinrichtung 7 mittels nicht dargestellter Regelventile kontrolliert. Der Rahmen 6 dichtet die Pressfläche 4,5 mittels nicht dargestellter Dichtelemente auch bei einer Bewegung der Pressflächen 4,5 während des Pressvorgangs weitgehend druckdicht ab, so dass ein gegenüber dem Umgebungsluftdruck p _{Umgebung} in der Kernstruktur 2 erhöhter Füllgasdruck p _{Füllgas} erreichbar ist. Die drei Anschlüsse 8 bis 10 ermöglichen eine schnelle Einstellung eines vorgegebenen Füllgasdrucks in der Kernstruktur 2. Eine abweichende Anzahl von Anschlüssen ermöglicht gleichfalls eine ausreichende Funktion der Anordnung.

Als Füllgas kommt beispielsweise Luft, Stickstoff oder ein anderes chemisch inertes Gas zur Anwendung. Zur Durchführung des erfindungsgemäßen Verfahrens erfasst die Steuer- und Regeleinrichtung 7 permanent den Erstarrungsgrad bzw. den Viskositätszustand der Deckschichten 1,3 während des Aushärtungsvorgangs des Sandwichbauteils.

Die Erfassung des Erstarrungsgrades kann beispielsweise durch eine Messung der Änderung der Dielektrizitätszahl des für die Bildung der Deckschichten 1,3 eingesetzten Kunststoffmaterials bzw. des "Prepreg"-Materials während des Aushärtungsvorgangs realisiert werden. Hierzu sind geeignete elektrische Sensoren im Bereich der Pressfläche 4,5 bzw. der Deckschichten 1,3 anzuordnen.

Alternativ können auch zeit-, temperatur-, sowie druckabhängige Aushärtungskurven des jeweiligen "Prepreg"-Materials empirisch ermittelt werden. Diese Aushärtungskurven werden dann in der Steuer- und Regeleinrichtung 7 hinterlegt. Durch eine Messung der Zeitdauer des Aushärtungsvorgangs kann die Steuer- und Regeleinrichtung 7 dann beispielsweise, jeweils in Abhängigkeit von der mittels der Heizeinrichtung vorgegebenen Temperatur der Pressflächen 4,5, den aktuellen Erstarrungsgrad bzw. den aktuellen Viskositätszustand der Deckschichten 1,3 ermitteln.

Aus dem auf diese Weise ermittelten aktuellen Erstarrungsgrad bzw. dem jeweiligen Viskositätszustand der Deckschichten 1,3 wird dann ein erforderlicher Füllgasdruck p _{Füllgas} ermittelt, um die Entstehung von Einfallstellen innerhalb der Deckschichten 1,3 während des Aushärtungsvorgangs sicher zu vermeiden. Hierbei ist zu berücksichtigen, dass sich die mechanische Belastbarkeit der Klebeverbindung zwischen den Deckschichten 1,3 und der Kernstruktur 2 bei fortschreitendem Aushärtungsprozess mit zunehmendem Aushärtungsgrad der Deckschichten 1,3 erhöht, so dass der Füllgasdruck p _{Füllgas} in Abhängigkeit vom zunehmenden Aushärtungsgrad der Deckschichten 1,3 stetig gesteigert werden kann.

Der Füllgasdruck p _{Füllgas}, den die Presse infolge der Presskraft F auf die Deckschichten 1,3 bzw. die Kernstruktur 2 aufbringt, wird bevorzugt nicht größer als ein Arbeitsdruck p _{Arbeit} der Presse gewählt, um einen noch genügenden Anpressdruck der Deckschichten 1,3 auf die Kernstruktur 2 zu erreichen. Dieser Arbeitsdruck p _{Arbeit} bzw. Anpressdruck ist für die Erzeugung einer ausreichend mechanisch belastbaren Klebeverbindung zwischen den Deckschichten 1,3 und der Kernstruktur 2 und damit für die erreichbare Gesamtfestigkeit des herzustellenden Sandwichbauteils zwingend erforderlich.

Durch eine entsprechende Steuerung des Füllgasdrucks p_{Füllgas} in Abhängigkeit vom Fortschreiten des Aushärtungsvorgangs und damit des zunehmenden Erstarrungsgrades der Deckschichten 1,3 mittels der Steuer- und Regeleinrichtung 7, lässt sich ein Sandwichbauteil mit einer nahezu optimalen Oberflächenbeschaffenheit, das heißt insbesondere ohne Einfallstellen oder dergleichen, herstellen. Eine bislang aufwändige mechanische Nachbearbeitung der Oberflächen der Sandwichbauteile, insbesondere für die Verwendung als Innenverkleidungsbauteile für Passagierkabinen von Luftfahrzeugen, durch Schleifen, Spachteln oder dergleichen, kann damit entfallen.

Um das herzustellende Sandwichbauteil von Anfang an mit einer Randabdichtung zu versehen ist es möglich, beispielsweise der Deckschicht 1 eine größere Fläche zu geben als einer Oberseite 11 bzw. einer Unterseite 12 der Kernstruktur 2. Das überschüssige Deckschichtmaterial wird dann über die Kanten 13 bis 16 der Kernstruktur 2 gelegt und während des Aushärtungsvorgangs an die Kanten 13 bis 16 zur Bildung der Randabdichtung mit angebunden. Weiterhin ist es möglich, das überschüssige Deckschichtmaterial ausgehend von der Oberseite 11 um die Kanten 13 bis 16 bis auf die Unterseite 12 der Kernstruktur 2 herumzuziehen. Die integrale Herstellung einer Randabdichtung setzt einen entsprechend passgenau ausgebildeten Rahmen 6 voraus, wobei eine Materialstärke des für die Bildung der Deckschichten 1,3 verwendeten Materials berücksichtigt werden muss. Durch diese erfindungsgemäße Vorgehensweise wird die nachträgliche Erstellung einer Randabdichtung, beispielsweise durch das Einspachteln bzw. Einstreichen eines Abdichtungsmaterials entbehrlich.

Diese Vorgehensweise setzt voraus, dass im gezeigten Ausführungsbeispiel die Anschlüsse 8 bis 10 in ihrer Funktion als Zu- und Abluftstutzen für das Füllgas zumindest das an die Kante 16 der Kernstruktur 2 gelegte Deckschichtmaterial durchdringen. Nach der Aushärtung sind diese Durchführungen, deren Lage insbesondere bei der Herstellung von Innenverkleidungsteilen bevorzugt so gewählt wird, dass sie bei der Endmontage nicht im Sichtbereich liegen, mit entsprechenden Materialien zu verschließen, um das Eindringen von Feuchtigkeit und/oder Fremdpartikeln zu vermeiden.

Weiterhin kann eine Temperatur des Füllgases T _{Füllgas} erforderlichenfalls mittels einer Temperiereinrichtung, insbesondere einer kombinierten Heiz- und Kühleinrichtung, gezielt abgesenkt werden, um in diesem Fall durch eine Abkühlung des Sandwichbauteils eine schnellere Entnehmbarkeit desselben aus der Presse und insbesondere eine Verkürzung des Herstellungsprozesses zu gewährleisten.

Die Temperatur der Pressflächen 4,5 beträgt, in Abhängigkeit vom eingesetzten Harzsystem, beispielsweise 140°C, um einen ausreichend schnellen Aushärtungsvorgang zu gewährleisten. Der Füllgasdruck p _{Füllgas} beträgt vorzugsweise weniger als 6 bar, um eine mechanisch noch ausreichend feste Anbindung der Deckschichten 1,3 an die Kernstruktur 2 zu erreichen.

Die Aushärtung des Sandwichbauteils kann alternativ auch in einem Autoklav erfolgen.

### Bezugszeichenliste

- 1: Deckschicht
- 2: Kernstruktur
- 3: Deckschicht
- 4: Pressfläche (obere)
- 5: Pressfläche (untere)
- 6: Rahmen
- 7: Steuer- und Regeleinrichtung
- 8: Anschluss
- 9: Anschluss
- 10: Anschluss
- 11: Oberseite (Kernstruktur)
- 12: Unterseite (Kernstruktur)
- 13: Kante
- 14: Kante
- 15: Kante
- 16: Kante

## Patentansprüche

1. Verfahren zur Herstellung von Sandwichbauteilen mit einer offenen Kernstruktur (2) und beidseitig aufgebrachten Deckschichten (1, 3), wobei die Deckschichten (1, 3) mit einem aushärtbaren Kunststoffmaterial gebildet sind, und das Sandwichbauteil in einer geschlossenen Vorrichtung unter Druck ausgehärtet wird,
wobei vor dem zumindest teilweisen Erstarren der Deckschichten (1, 3) ein Füllgas, insbesondere Stickstoff oder Luft, in die Kernstruktur (2) eingebracht wird, wobei ein Füllgasdruck kleiner oder gleich einem Arbeitsdruck der geschlossenen Vorrichtung gewählt wird, um insbesondere die Bildung von Einfallstellen in den Deckschichten (1, 3) zumindest weitgehend zu vermeiden;
wobei der Füllgasdruck von einer Steuer- und Regeleinrichtung (7) in Abhängigkeit vom Erstarrungsgrad der Deckschichten variiert wird.

2. Verfahren nach Anspruch 1, **dadurch gekennzeichnet, dass** eine Temperatur des Füllgases verringert wird, um die Verweilzeit des Sandwichbauteils in der Vorrichtung zu reduzieren.

3. Verfahren nach einem der Ansprüche 1 oder 2, wobei als Vorrichtung zum Aushärten des Sandwichbauteils eine Presse oder ein Autoklav verwendet wird.

4. Verfahren nach einem der Ansprüche 1 bis 3, wobei der Erstarrungsgrad der Deckschichten (1,3), insbesondere ein Viskositätszustand der Deckschichten (1, 3), von der Steuer- und Regeleinrichtung (7) erfasst wird und der Füllgasdruck entsprechend variiert wird.

5. Verfahren nach einem Ansprüche 1 bis 4, wobei der Viskositätszustand mindestens einer Deckschicht (1,3) von der Steuer- und Regeleinrichtung (7) durch eine Änderung der Dielektrizitätszahl ermittelt wird.

6. Verfahren nach einem der Ansprüche 1 bis 5, wobei zur Bildung einer integralen Randabdichtung für das Sandwichbauteil mindestens ein über die Kernstruktur (2) überstehender Randabschnitt mindestens einer Deckschicht (1, 3) vor dem Aushärtevorgang in der geschlossenen Vorrichtung zumindest abschnittsweise an mindestens eine Kante (13, 14, 15, 16) der Kernstruktur (2) und/oder an die andere Deckschicht (1, 3) angelegt wird:

7. Presse zur Durchführung des Verfahrens nach einem der Ansprüche 1 bis 6 mit zwei mittels mindestens einer Heizeinrichtung temperierbaren Pressflächen (4, 5), die von einem Rahmen (6) zur Abdichtung umgeben sind, wobei eine Kennstruktur sowie mindestens zwei mit einem aushärtbaren Kunststoffmaterial gebildete Deckschichten (1, 3) zur Bildung eines Sandwichbauteils in den Rahmen (6) einbringbar und unter Druck setzbar sind, wobei der Rahmen (6) mindestens einen Anschluss (8, 9, 10) zur Zu- und/oder Abführung eines Füllgases in die Kernstruktur (2) aufweist, um während des Aushärtungsvorgangs des Sandwichbauteils-insbesondere die Entstehung von Einfallstellen in den Deckschichten (1, 3) zumindest teilweise zu vermeiden;
wobei die presse eine Steuer- und Regelvorrichtung (7) aufweist, mittels der der Füllgasdruck p _{Füllgas} in Abhängigkeit von dem Viskositätszustand der mit dem aushärtbaren Kunststoffmaterial gebildeten Deckschichten (1, 3) variierbar ist, um insbesondere die Entstehung von Einfallstellen in den Deckschichten (1, 3) zumindest teilweise zu vermeiden.

8. Presse nach Anspruch 7, wobei ein Arbeitsdruck p _{Arbeit} der Presse mittels der Steuer- und Regeleinrichtung (7) variierbar ist.

9. Presse nach Anspruch 7 oder 8, wobei eine Temperatur T _{Pressfläche} mindestens einer Pressfläche (4, 5) mittels der Steuer- und Regeleinrichtung (7) variierbar ist.

10. Presse nach einem der Ansprüche 7 bis 9, wobei eine Temperatur T _{Füllgas} des Füllgases mittels der Steuer- und Regeleinrichtung variierbar (7) ist.

11. Presse nach einem der Ansprüche 7 bis 10, wobei ein Aushärtungsgrad der Deckschichten (1, 3), insbesondere ein Viskositätszustand der Deckschichten, mittels der Steuer- und Regeleinrichtung (7) erfassbar ist.

12. Presse nach einem der Ansprüche 7 bis 11, wobei der Viskositätszustand während des Aushärtungsvorgangs der Deckschichten (1, 3) durch eine Messung der Dielektrizitätszahl von der Steuer- und Regeleinrichtung (7) erfassbar ist.

13. Presse nach einem der Ansprüche 7 bis 12, wobei der Ablauf des Aushärtungsvorgangs mittels der Steuer- und Regeleinrichtung (7) kontrollierbar ist.

## Claims

1. A method for producing of sandwich components with an open core structure (2) and both-sided applied cover layers (1, 3), wherein the cover layers (1, 3) are formed from a synthetic material adapted to solidify, and the sandwich component is solidified under pressure in a closed apparatus,
wherein before the at least partial curing of the cover layers (1, 3) a filling gas, in particular nitrogen or air, is brought into the core structure (2), wherein a filling gas pressure less or equal to an operating pressure of the closed apparatus is chosen, in particular to avoid the formation of sink marks in the cover layers (1, 3) at least as far as possible;
wherein the filling gas pressure is varied by a control and regulating unit (7) in dependence of the curing degree of the cover layers.

2. The method according to claim 1, **characterized in that** a temperature of the filling gas is decreased to reduce the dwell period of the sandwich component in the apparatus.

3. The method according to one of the claims 1 or 2, wherein as apparatus for curing of the sandwich component a press or an autoclave is used.

4. The method according to one of the claims 1 to 3, wherein the curing degree of the cover layers (1, 3), in particular a viscosity state of the cover layers (1, 3), is detected by the control and regulating unit (7) and the filling gas pressure is varied accordingly.

5. The method according to any of the claims 1 to 4, wherein the viscosity state of at least one cover layer (1, 3) is determined by the control and regulating unit (7) through a change of the dielectric constant.

6. The method according to one of the claims 1 to 5, wherein for formation of an integral peripheral seal for the sandwich component at least one boundary section, protruding over the core structure (2) of at least one cover layer (1, 3) is applied at least in sections to at least one edge (13, 14, 15, 16) of the core structure (2) and/or to the other cover layer (1, 3) before the curing procedure in the closed apparatus.

7. A press for performing the method according to one of the claims 1 to 6 with two press faces (4, 5), temperature controllable with at least one heating device, wherein the press faces are surrounded by a frame (6) for sealing,
wherein a core structure and at least two cover layers (1, 3), formed from synthetic material adapted to solidify, for forming a sandwich component, are placeable into the frame (6) and pressurizeable,
wherein the frame (6) has at least one connection (8, 9, 10) for supplying and/or discharging of a filling gas into the core structure (2), to in particular at least partially avoid the formation of sink marks in the cover layers during the curing procedure of the sandwich component; wherein the press comprises a control and regulating unit (7) capable to vary the pressure of the filling gas pfilling gas in dependence of the viscosity state of the cover layers (1, 3), formed from synthetic material adapted to solidify, to in particular at least partially avoid the formation of sink marks in the cover layers (1, 3).

8. The press according to claim 7, wherein an operating pressure poperation of the press is variable with the control and regulating unit (7).

9. The press according to claim 7 or 8, wherein a temperature tpress face of at least one press face (4, 5) is variable with the control and regulating unit (7).

10. The press according to one of the claims 7 to 9, wherein a temperature Tfilling gas of the filling gas is variable with the control and regulating unit (7).

11. The press according to one of the claims 7 to 10, wherein a curing degree of the cover layers (1, 3), in particular a viscosity state of the cover layers, is detectable with the control and regulating unit (7).

12. The press according to one of the claims 7 to 11, wherein the viscosity state during the curing procedure of the cover layers (1, 3) is detectable by the control and regulating unit (7) via a measurement of the dielectric constant.

13. The press according to one of the claims 7 to 12, wherein the process of the curing procedure is controllable with the control and regulating unit (7).

## Revendications

1. Procédé de fabrication de composants sandwich présentant une structure centrale (2) et des couches de couverture (1, 3) appliquées bilatéralement,
les couches de couverture (1, 3) étant réalisées dans un matériau plastique durcissable, et le composant sandwich étant durci sous pression dans un dispositif fermé,
un gaz de remplissage, notamment de l'azote ou de l'air étant introduit dans la structure centrale (2) avant le durcissage au moins partiel des couches de couverture (1, 3), une pression de gaz de remplissage étant choisie inférieure ou égale à une pression de travail dudit dispositif fermé, afin d'éviter notamment la formation de affaissements dans les couches de couverture (1, 3),
la pression de gaz de remplissage étant variée à l'aide d'un dispositif de commande et de réglage (7) en fonction du degré de durcissage des couches de couverture.

2. Procédé selon la revendication 1, **caractérisé par le fait qu'**une température du gaz de remplissage est diminuée pour réduire le temps de séjour du composant sandwich dans le dispositif.

3. Procédé selon une des revendications 1 ou 2, une presse ou un autoclave étant utilisé(e) comme dispositif pour durcir le composant sandwich.

4. Procédé selon une des revendications 1 à 3, le degré de durcissage des couches de couverture (1, 3), notamment un état de viscosité des couches de couverture (1, 3), étant saisi par le dispositif de commande et de réglage (7) et la pression du gaz de remplissage variant de manière correspondante.

5. Procédé selon une des revendications 1 à 4, l'état de viscosité d'au moins une couche de couverture (1,3) étant saisi par le dispositif de commande et de réglage (7) par une modification de l'indice diélectrique.

6. Procédé selon une des revendications 1 à 5, au moins un bord de zone en saillie par rapport à la structure centrale (2) d'au moins une couche de couverture (1,3) étant appliqué avant le processus de durcissage dans le dispositif fermé au moins en partie au niveau d'au moins un bord (13, 14, 15, 16) de la structure centrale (2) et/ou au niveau de l'autre couche de couverture (1, 3) afin de former un joint de bordure intégral pour le composant sandwich.

7. Presse destiné à la réalisation du procédé selon une des revendications 1 à 6 dotée de deux surfaces de presse (4, 5) pouvant être thermorégulées au moyen d'au moins un dispositif de chauffage, ces dernières étant entourées d'un châssis (6) destiné à l'étanchéité, une structure centrale ainsi qu'au moins deux couches de couverture (1, 3) réalisées dans un matériau en plastique durcissable pouvant être intégrées dans le châssis (6) et pouvant être mises sous pression pour la formation d'un composant sandwich, le châssis (6) présentant au moins un raccordement (8, 9, 10) vers l'entrée et/ou la sortie d'un gaz de remplissage dans la structure centrale (2), afin d'éviter pendant le processus de durcissage du composant sandwich notamment au moins en partie la formation de affaissements dans les couches de couverture (1,3);
la presse présentant un dispositif de commande et de réglage (7), au moyen duquel la pression du gaz de remplissage p_{gaz} de remplissage peut varier en fonction de l'état de viscosité des couches de couverture (1, 3) réalisées dans le matériau en plastique durcissable, afin d'éviter au moins en partie la formation de affaissements dans les couches de couverture (1, 3).

8. Presse selon la revendication 7, une pression de travail pₜᵣₐᵥₐᵢₗ de la presse pouvant être variée au moyen du dispositif de commande et de réglage (7).

9. Presse selon la revendication 7 ou 8, une température T_{surface} de pression d'au moins une surface de pression (4, 5) pouvant être variée au moyen du dispositif de commande et de réglage (7).

10. Presse selon une des revendications 7 à 9, une température T_{gaz} de remplissage du gaz de remplissage pouvant être variée au moyen du dispositif de commande et de réglage (7).

11. Presse selon une des revendications 7 à 10, un niveau de durcissage des couches de couverture (1, 3), notamment un état de viscosité des couches de couverture, pouvant être saisi au moyen du dispositif de commande et de réglage (7).

12. Presse selon une des revendications 7 à 11, l'état de viscosité pendant le processus de durcissage des couches de couverture (1, 3) pouvant être saisi par une mesure de l'indice diélectrique effectué par le dispositif de commande et de réglage (7).

13. Presse selon une des revendications 7 à 12, le déroulement du processus de durcissage pouvant être contrôlé au moyen du dispositif de commande et de réglage (7).
